# EUROPEAN PATENT APPLICATION

(11) **EP 1 642 697 A2**
(43) Date of publication of application: **05.04.2006**
(21) Application number: 05256197.4
(22) Date of filing: 04.10.2005
(51) Int. Cl.: B29C 45/50, B29C 45/77

(54) **Injection device for injection molding machine**

(30) Priority: 04.10.2004 JP 2004291675; 23.02.2005 JP 2005047661
(71) Applicant: FANUC LTD, Minamitsuru-gun, Yamanashi 401-0597 (JP)
(72) Inventor: Yamanaka, Katsuyuki, Fanuc Manshonharimomi, Minamitsuru-gun Yamanashi, 401-0511 (JP); Nishimura, Koichi, Shizuoka, 410-1115 (JP); Shima, Koji, Yamanashi, 403-0005 (JP); Yano, Satoshi, Yamanashi,402-0011 (JP)
(74) Representative: Billington, Lawrence Emlyn

(57) **Abstract**

A driven pulley (4) is attached via a bearing (3) to a first housing (1) that can move in the axial direction of injection.
This driven pulley is connected to a rotation transmitting member (5) by a spline coupling (17). An injection screw (8) is fastened to this rotation transmitting member (5). Furthermore, this rotation transmitting member (5) is attached to a second housing (7) via a bearing (6) so as to move in the axial direction. The first housing (1) and second housing (7) are respectively fastened to the outer ring part (2a) and inner ring part (2b) of a load detection device (2). Since the first (1) and second (7) housings are capable of relative movement in the axial direction of an injection shaft, no pre-load is generated in the load detection device (2).
Movement of the driven pulley (4) caused by the tension of the mounted belt is checked by a bearing. No frictional force is generated in the spline coupling part (17). Accordingly, the resin pressure that is applied to the injection screw (8) can be accurately measured by the load detection device (2).

## Description

### BACKGROUND OF THE INVENTION

### 1. Field of the Invention

The present invention relates to an injection device in an injection molding machine which can measure the resin pressure that acts on the injection screw.

### 2. Description of the Related Art

In injection devices used in injection molding machines, the injection pressure that is applied when the molten resin is injected into the mold during the injection process and the back pressure that is applied to the resin inside the heating cylinder during the metering process are not determined by directly measuring the pressure of the resin inside the heating cylinder; instead, these pressures are determined by measuring the pressure (counter force) of the resin inside the heating cylinder that is applied to the injection screw using a load detection device such as a load cell or the like.

Thus, the resin pressure inside the heating cylinder is not determined by direct measurement of this pressure, but is rather determined by measuring the resin pressure inside the heating cylinder that is applied to the injection screw; accordingly, this measured pressure is subjected to the effects of forces that are applied between the injection screw and the load detection device.

A system which is devised so that the pressure applied to the injection screw can be detected without applying a pre-load to the load cell is disclosed as a countermeasure in Japanese Patent Application Laid-Open No. 4-77226. The following is described in this Japanese Patent Application Laid-Open No. 4-77226.

The screw coupling to which the injection screw is attached is equipped with a transmission gear. The injection screw can be rotated by means of a gear transmission mechanism. The screw coupling is bearing-supported by a transmission link; this transmission link is attached to a guide coupling so that the transmission link can move in the axial direction, but so that the position of this link in the direction of rotation is restricted. The guide coupling can slide with respect to a guide shaft; however, rotation of this guide coupling is restricted. Furthermore, the transmission link and guide coupling are fastened to each other, and the system is devised so that no pre-load is applied to a load cell that is disposed between these parts. The system is also devised so that no pre-load is applied to the load cell in the attachment of the transmission link to the screw coupling.

Japanese Patent Application Laid-Open No. 2000-117789 discloses a technique in which the application of a biased pressure to the load cell is prevented in a case where a belt transmission is used to rotate the injection screw, as a result of the tension of the belt applying a force which is oriented at right angles to the axial direction to a shaft that is connected to the injection screw. The following is described in this Japanese Patent Application Laid-Open No. 2000-117789.

The rear end of the injection screw is attached to a screw supporting shaft, and this screw supporting shaft is attached to a bearing box so that this shaft can rotate. A load cell is attached between this bearing box and a movable plate that is driven in the axial direction by an injection motor. The rear end part of the screw supporting shaft and a transmission shaft that is fastened to the movable plate so that this transmission shaft can rotate are connected to each other by a spline coupling. A driven pulley is disposed on the transmission shaft, and this driven pulley is caused to rotate by a metering motor via a belt. A metering operation is performed by transmitting this rotation to the transmission shaft, screw supporting shaft and injection screw. Furthermore, injection is performed by driving the injection motor so that the movable plate, load cell, bearing box, screw supporting shaft and injection screw are caused to advance. A moment is applied to the transmission shaft from the belt that is mounted on the driven pulley; however, this moment is absorbed by the spline coupling between the transmission shaft and screw supporting shaft, so that no moment is transmitted to the screw supporting shaft from the transmission shaft. As a result of this construction, no biased pressure is applied to the load cell.

Japanese Patent Application Laid-Open No. 2000-334789 constructs a countermeasure against the inability to achieve accurate detection of the force applied to the injection screw that is measured by the load sensor as a result of variation in the frictional force due to the effects of the belt tension in cases where the injection screw is caused to rotate by a belt transmission. The following is described in this Japanese Patent Application Laid-Open No. 2000-334789.

A drive shaft to which the rear end of the screw is attached is attached to the housing via a bearing so that this drive shaft can rotate and can move in the axial direction. A pulley is attached to this drive shaft, and this pulley is caused to rotate by a motor via a belt, so that the screw is caused to rotate. Furthermore, the pulley and drive shaft are connected by a spline coupling (along with an attachment to the side of the housing via a bearing so that rotation is possible). Even if the pulley is caused to move at right angles to the axial center by the tension of the belt, this amount of movement is absorbed by the gaps between the splines, so that this movement is not transmitted to the drive shaft. Accordingly, the frictional force of the sliding surface of the drive shaft does not vary, so that there is no effect on the load sensor disposed between the drive shaft and the housing.

The use of a belt transmission mechanism as the rotation transmission mechanism that transmits rotation to the injection screw is more advantageous than the use of a gear transmission mechanism from the standpoint of backlash as well as from the standpoint of maintenance. Accordingly, in the invention described in the Japanese Patent Application Laid-Open No. 4-77226, if a belt transmission mechanism using a belt and pulley is used instead of a gear transmission mechanism as the rotation transmission mechanism that transmits rotation to the injection screw, the pressure that is applied to the injection screw can be detected without applying a pre-load to the load detection device (such as a load cell or the like). Nevertheless, a biased load is applied to the load detection device as a result of the effects of the moment that is generated by the belt tension, and at the same time, a frictional resistance is generated with the inner race of the bearing, thereby making accurate pressure detection impossible.

Methods for preventing the biased load and increase in frictional force caused by the generation of this moment by the belt tension are described in Japanese Patent Application Laid-Open No. 2000-117789 and Japanese Patent Application Laid-Open No. 2000-334789. The invention described in Japanese Patent Application Laid-Open No. 2000-117789 has a structure in which the belt mechanism (pulley) that causes the injection screw to rotate is disposed on the side opposite the injection screw with respect to the position where the load cell is disposed. Furthermore, in the invention described in Japanese Patent Application Laid-Open No. 2000-334789, the outer race of the bearing that is attached to the drive shaft that moves in the axial direction slides while directly contacting the housing; accordingly, the following problem arises: namely, a frictional resistance exists in the sliding surfaces, so that the thrust measured by the load sensor is a synthesized force that combines the counter force of the screw and the frictional force between the bearing and the housing, thus making accurate measurement of the injection pressure impossible.

### SUMMARY OF THE INVENTION

A first aspect of the injection device for an injection molding machine according to the present invention comprises a first member which moves in the axial direction of an injection screw, a pulley which is rotatably supported on the first member, a rotation transmitting member which is connected to the pulley so as not to relatively rotate and so as to move in the axial direction, and in which an injection screw is attached to the front surface of the transmitting member, a second member which cannot move in the axial direction and which does not contact the first member, and which further supports the rotation transmitting member via a bearing so as to rotate, and a load detection device which has an outer ring part and an inner ring part. Furthermore, the outer ring part of the load detection device is attached to the first member, the inner ring part of the load detection device is attached to the second member, and resin pressure that acts on the injection screw is measured by the load detection device.

The second member may have a recessed part, and the rotation transmitting member may be attached to this recessed part so as to rotate and so as not to move in the axial direction.

The rotation transmitting member may have a recessed part, and the second member may be attached to this recessed part so as to rotate and so as not to move in the axial direction.

A second aspect of the injection device for an injection molding machine according to the present invention comprises a first member which moves in the axial direction of an injection screw, a pulley which is rotatably supported on the first member, and which is connected to the rear end of the injection screw so as to move in the axial direction of the injection screw but so as not to rotate, a second member which is disposed in a position at which this second member does not contact the first member, a pressure transmitting member which is attached to the second member via a bearing so as to rotate an so as not to move in the axial direction, and which contacts the rear end of the injection screw so as to rotate together with the injection screw, and a load detection device which has an outer ring part and an inner ring part. Furthermore, the outer ring part of the load detection device is attached to the first member, the inner ring part of the load detection device is attached to the second member, and the resin pressure that acts on the injection screw is measured by the load detection device.

The second member may have a recessed part, and the pressure transmitting member may be attached to this recessed part so as to rotate together with the injection screw and so as not to move in the axial direction.

The pressure transmitting member may have a recessed part, and the second member may be attached to this recessed part so as to rotate and so as not to move in the axial direction.

A third aspect of the injection device for an injection molding machine according to the present invention comprises a first member which moves in the axial direction of the injection screw, a pulley which is supported on the first member so as to rotate, a rotation transmitting member which is connected to the pulley so as not to rotate but so as move in the axial direction, and in which the injection screw is attached to the front surface of the rotation transmitting member, and a load detection device which has an inner ring part and an outer ring part. Furthermore, a rotation transmitting member attachment part is formed on the inner ring part of the load detection device so as not to contact the first member, the rotation transmitting member is attached to the rotation transmitting member attachment part via a bearing so as to rotate and so as not to move in the axial direction, the first member is attached to the outer ring part of the load detection device, and the resin pressure that acts on the injection screw is measured by the load detection device.

The rotation transmitting member attachment part of the load detection device may have a recessed part, and the rotation transmitting member may be attached to this recessed part so as to rotate and so as not to move in the axial direction.

The rotation transmitting member may have a recessed part, and the rotation transmitting member attachment part of the load detection device may be attached to this recessed part so as to rotate and so as not to move in the axial direction.

A fourth aspect of the injection device for an injection molding machine according to the present invention comprises a first member which moves in the axial direction of an injection screw, a pulley which is rotatably supported on the first member, and which is connected to the rear end of the injection screw so as to move in the axial direction and so as not to rotate, a pressure transmitting member which contacts the rear end of the injection screw, and a load detection device which has an inner ring part and an outer ring part. Furthermore, a pressure transmitting member attachment part for attaching the pressure transmitting member is formed on the inner ring part of the load detection device so as not to contact the first member, the pressure transmitting member is attached to this pressure transmitting member attachment part via a bearing so as to rotate and so as not to move in the axial direction, the first member is attached to the outer ring part of the load detection device, and the resin pressure that acts on the injection screw is measured by the load detection device.

The pressure transmitting member attachment part may have a recessed part, and the pressure transmitting member may be attached to this recessed part so as to rotate together with the injection screw and so as not to move in the axial direction.

The pressure transmitting member may have a recessed part, and the pressure transmitting member attachment part of the load detection device may be attached to this recessed part so as to rotate together with the injection screw and so as not to move in the axial direction.

In the injection device of the present invention, the load detection device can be attached without applying a pre-load to this load detection device, so that there is hardly any application of pressures other than the resin pressure applied to the injection screw in the area extending from the injection screw to the load detection device. Accordingly, the resin pressure such as the injection pressure, back pressure or the like can be accurately detected by the load detection device.

### BRIEF DESCRIPTION OF THE DRAWINGS

The nature of this invention, as well as other objects and advantages thereof, will be explained in the following with reference to the accompanying drawings.
Fig. 1 is a sectional view of essential parts of an injection device constituting a first embodiment of the present invention;
Fig. 2 is a sectional view of essential parts of an injection device constituting a second embodiment of the present invention;
Fig. 3 is a sectional view of essential parts of an injection device constituting a third embodiment of the present invention;
Fig. 4 is a sectional view of essential parts of an injection device constituting a fourth embodiment of the present invention;
Fig. 5 is a sectional view of essential parts of an injection device constituting a fifth embodiment of the present invention;
Fig. 6 is a sectional view of essential parts of an injection device constituting a sixth embodiment of the present invention;
Fig. 7 is a sectional view of essential parts of an injection device constituting a seventh embodiment of the present invention; and
Fig. 8 is a sectional view of essential parts of an injection device constituting an eighth embodiment of the present invention;

### DESCRIPTION OF THE PREFERRED EMBODIMENTS

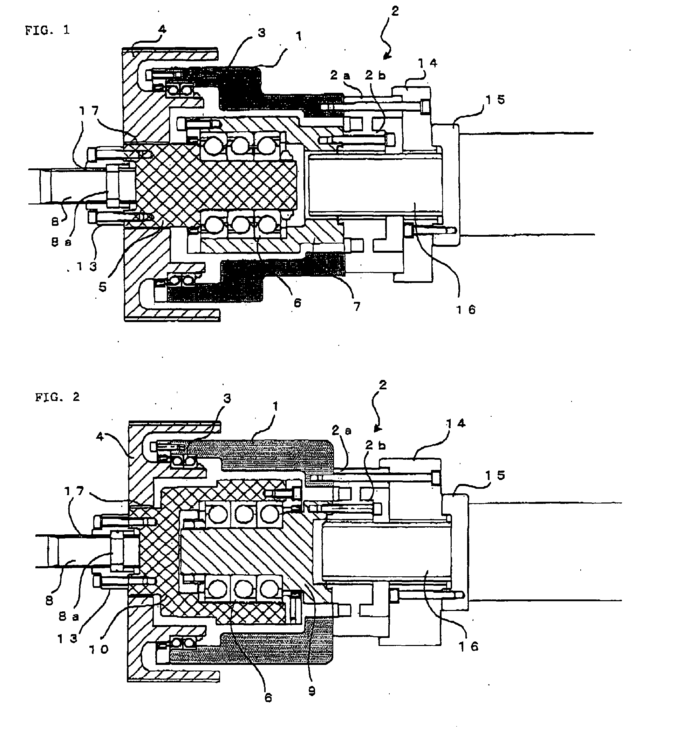

Fig. 1 is a sectional view of essential parts of an injection device constituting a first embodiment of the present invention.

A first housing 1 (first member) is disposed by means of a guide (not shown in the figures) such as a linear guide, guide rod or the like so that this first housing 1 can move in the axial direction of the screw (i. e., the left-right direction in Fig. 1) but cannot rotate. A driven pulley 4 is attached to the first housing 1 via a bearing 3 so that this driven pulley 4 can rotate with respect to the first housing 1 but cannot move in the axial direction.

A rotation transmitting member 5 is connected to the driven pulley 4 so that only relative movement in the direction of rotation is constrained. In this first embodiment, male splines formed on the rotation transmitting member 5 and female splines formed in the driven pulley 4 are engaged. Specifically, the rotation transmitting member 5 and driven pulley 4 are connected by a spline coupling 17.

A screw connecting member 13 is attached to the front end surface of the rotation transmitting member 5 by means of bolts. The rear end of the injection screw 8 is connected to this screw connecting member 13 by the spline coupling 17. Furthermore, when the screw connecting member 13 is fastened to the rotation transmitting member 5 by means of bolts, an expanded-diameter part 8a formed on the injection screw 8 is pressed against the rotation transmitting member 5, so that the rear end surface of the injection screw 8 contacts the rotation transmitting member 5. As a result, the rotation transmitting member 5 is integrally fastened to the screw 8.

Furthermore, the rotation transmitting member 5 is attached to the recessed part of a second housing 7 (second member) via a bearing 6 so that this rotation transmitting member 5 cannot move in the axial direction with respect to the second housing 7. A gap is formed between the first housing 1 and second housing 7 so that these two housings do not contact each other.

The second housing 7 is fastened to the inner ring part 2b of a load detection device 2. Furthermore, the outer ring part 2a of the load detection device 2 is fastened by means of bolts so that this outer ring part 2a is clamped between the first housing 1 and a nut connecting member 14. The nut connecting member 14 is connected to the nut 15 of a ball screw/nut mechanism. Furthermore, the reference numeral 16 denotes the ball screw of the ball screw/nut mechanism; this ball screw passes through holes formed in the centers of the load detection device 2 and nut connecting member 14.

A belt (not shown in the figures) is mounted between the driven pulley 4 and a drive pulley (not shown in the figures) attached to the rotor shaft of a screw rotation motor (not shown in the figures) that is attached to the first housing 1. By driving this screw rotation motor in the metering process, the injection screw 8 is caused to rotate via the driven pulley 4 and rotation transmitting member 5, so that the resin inside the heating cylinder (not shown in the figures) is melted and kneaded.

In the injection process, the ball screw 16 is caused to rotate by an injection motor (not shown in the figures), so that the nut 15 coupled with this ball screw 16 and the nut connecting member 14 that is integrally attached to this nut 15 are caused to advance (i. e., to move from right to left in Fig. 1).

The force of the advancing nut 15 and nut connecting member 14 is transmitted to the first housing 1 and second housing 7 via the load detection device 2. Furthermore, the force that is transmitted to the second housing 7 is transmitted to the injection screw 8 that is integrally fastened to the rotation transmitting member 5 via the bearing 6 and rotation transmitting member 5, so that the injection screw 8 is driven in the axial direction, thus injecting the molten resin inside the heating cylinder (not shown in the figures) into the metal mold.

During the metering process, the resin inside the heating cylinder is melted by the rotation of the injection screw 8, and the injection screw 8 is pressed by the pressure of the molten resin so that this injection screw 8 is retracted (i. e., so that this injection screw 8 moves from left to right in Fig. 1). The force that causes the retraction of this injection screw 8 presses against the inner ring part 2b of the load detection device 2 via the rotation transmitting member 5, bearing 6 and second housing 7. As a result, a strain is generated between the outer ring part 2a and inner ring part 2b of the load detection device 2, and the resin pressure that presses against the injection screw 8 is measured by means of this strain.

Similarly, furthermore, in the injection process as well, the nut 15 and the nut connecting member 14 connected to the nut 15 are caused to advance by the driving of the injection motor, and the first housing 1 and second housing 7 are caused to advance via the load detection device 2. The force that causes the second housing 7 to advance is transmitted to the injection screw 8 via the bearing 6 and rotation transmitting member 5, so that the injection screw 8 is caused to advance; as a result, the molten resin inside the heating cylinder is injected into the metal mold. In this case, the pressure of the injected resin is applied to the injection screw 8 as a counter force, and the force that causes the injection screw 8 to move in the axial direction is transmitted to the inner ring part 2b of the load detection device 2 via the rotation transmitting member 5, bearing 6 and second housing 7. As a result, the inner ring part 2b of the load detection device 2 is pressed, and a strain is generated between the outer ring pat 2a and inner ring part 2b of the load detection device 2; consequently, the injection pressure is measured by the load detection device 2.

In this first embodiment, the outer ring part 2a of the load detection device 2 is attached to the first housing 1, and the inner ring part 2b is attached to the second housing 7. Since the first housing 1 and second housing 7 are capable of relative movement in the axial direction of injection, no pre-load is generated between the outer ring part 2a and inner ring part 2b of the load detection device 2 when this load detection device 2 is attached to this injection mechanism.

Furthermore, the driven pulley 4 is subjected to a radial load on the side of the screw rotation motor (not shown in the figures) by the tension of the belt that drives the driven pulley 4. However, since the driven pulley 4 is fastened to the first housing 1 via the bearing 3 so that this driven pulley 4 can rotate, there is almost no movement in the radial direction. Strictly speaking, the driven pulley 4 moves in a direction perpendicular to the axial center by an amount corresponding to the gap of the bearing 3; however, since the driven pulley 4 and rotation transmitting member 5 are connected by a spline coupling 17, and since the gap of the splines is much greater than the gap of the bearing 3, no radial load acts on the rotation transmitting member 5.

Furthermore, the resin pressure that is applied to the injection screw 8 is transmitted to the inner ring part 2b via the rotation transmitting member 5, bearing 6, second housing 7 and load detection device 2; however, since the rotation transmitting member 5, bearing 6 and second housing 7 are attached so that the movement of these parts relative to each other is impossible, and since there are no sliding surfaces between these members and the first housing 1, this system is not subjected to the effects of any frictional force. Moreover, as was described above, no radial load generated by the tension of the belt acts on the rotation transmitting member 5. Accordingly, there is likewise almost no frictional resistance between the driven pulley 4 and the rotation transmitting member 5; consequently, the resin pressure that is applied to the injection screw 8 can be accurately measured by the load detection device 2.

Fig. 2 is a sectional view of essential parts of an injection device constituting a second embodiment of the present invention.

In the first embodiment, the rotation transmitting member 5 is attached to the inner race of the bearing 6, an the second housing 7 is attached to the outer race of the bearing 6, so that the movement of these parts relative to each other in the axial direction is impossible.

In the injection device of this embodiment, on the other hand, as is shown in Fig. 2, the rotation transmitting member 10 is attached to the outer race of bearing 6 so that this rotation transmitting member 10 cannot move in the axial direction, and a shaft 9 (second member) is attached to the inner race of the bearing 6 so that this shaft 9 cannot move in the axial direction. Furthermore, this shaft 9 is fastened to the inner ring part 2b of the load detection device 2.

The second member in the first embodiment is the housing 7; however, the second member in this embodiment is the shaft 9. The remaining construction is the same as in the first embodiment shown in Fig. 1. Furthermore, the rotation transmitting member 10 and shaft 9 are disposed so that these parts do not contact the first housing 1.

In this second embodiment as well, the driven pulley 4 is driven by the screw rotation motor via a belt transmission mechanism in the metering process, so that the injection screw 8 is caused to rotate via the rotation transmitting member 10. Furthermore, in the injection proces.s, the ball screw 16 is caused to rotate by the injection motor so that the nut 15 is caused to advance, and the injection screw 8 is driven in the axial direction via the nut connecting member 14, load detection device 2, shaft 9 and rotation transmitting member 10, so that the molten resin is injected into the metal mold.

In this second embodiment as well, the driven pulley 4 is subjected to a radial load on the side of the screw rotation motor by the tension of the belt that drives the driven pulley 4. However, since the driven pulley 4 is fastened to the first housing via a bearing 3 so that rotation is possible as in the first embodiment, there is almost no movement in the radial direction. Even if some movement does occur, this movement is equivalent to the gap of the bearing 3, and is absorbed by the gaps of the spline coupling 17 between the driven pulley 4 and rotation transmitting member 10 so that almost no radial load acts on the rotation transmitting member 10. Accordingly, even if the injection screw 8 receives the resin pressure and is caused to retract relative to the first housing 1 (i. e., even if the injection screw 8 moves from left to right in Fig. 2), there is almost no sliding frictional resistance in the retracted rotation transmitting member 10 or shaft 9, so that the resin pressure that is applied to the injection screw 8 can be accurately measured by the load detection device 2.

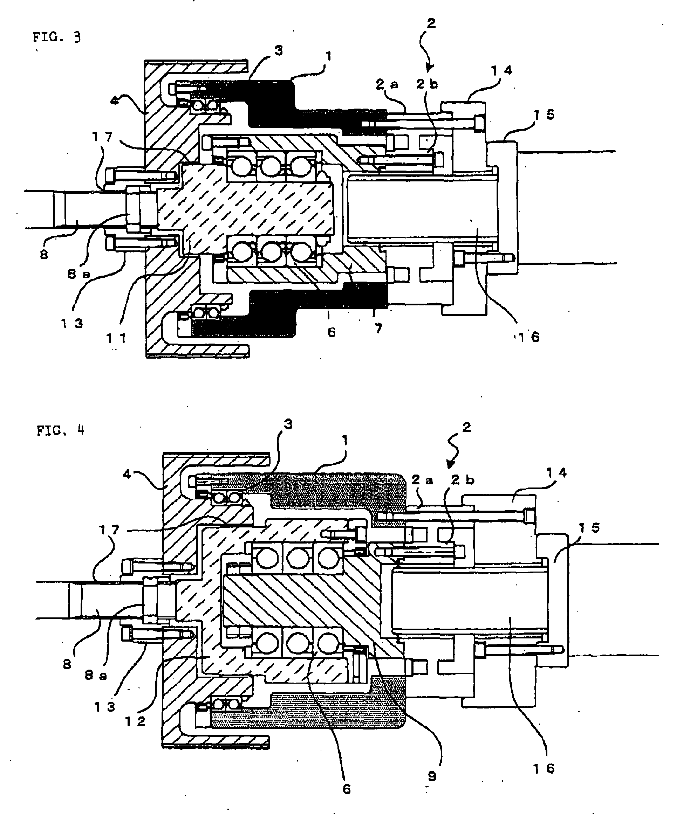

Fig. 3 is a sectional view of essential parts of an injection device constituting a third embodiment of the present invention.

In the first embodiment, the injection screw 8 is attached to the rotation transmitting member 5 using a screw connecting member 13. In this embodiment, on the other hand, the injection screw 8 is attached to the driven pulley 4 using this screw connecting member 13. Furthermore, in the first embodiment, the injection screw 8 is integrally fastened to the rotation transmitting member 5; in this embodiment, however, the injection screw 8 contacts a pressure transmitting member 11.

In this third embodiment, the driven pulley 4 and injection screw 8 are connected by a screw connecting member 13. This screw connecting member 13 is connected to the shaft of the injection screw 8 by a spline coupling 17 so that relative rotation is impossible (but so that relative movement in the axial direction is possible). Furthermore, since the expanded-diameter part 8a formed on the injection screw 8 is pressed against the pressure transmitting member 11 when the screw connecting member 13 is fastened to the driven pulley 4 by means of bolts, the rear end surface of the injection screw 8 contacts the pressure transmitting member 11. Furthermore, the driven pulley 4 is_connected to the pressure transmitting member 11 by a spline coupling 17 so that relative rotation is impossible (but so that relative movement in the axial direction is possible). The remaining construction is the same as in the first embodiment shown in Fig. 1.

Specifically, the first housing 1 (first member) is disposed by means of a guide (not shown in the figures) so that this first housing 1 can move in the axial direction of the screw (i. e., in the left-right direction in Fig. 1) but cannot rotate. The driven pulley 4 is attached to the first housing 1 via a bearing 3 so that the driven pulley 4 can rotate but cannot move in the axial direction.

The pressure transmitting member 11 is attached via the bearing 6 to the recessed part of the second housing 7 (second member) so that this pressure transmitting member 11 can rotate with respect to the second housing 7, but cannot move in the axial direction. A gap is formed between the first housing 1 and second housing 7 so that these housings do not contact each other.

The second housing 7 is fastened to the inner ring part 2b of a load detection device 2. Furthermore, the outer ring part 2a of the load detection device 2 is fastened by means of bolts so that this outer ring part 2a is clamped between the first housing 1 and a nut connecting member 14. This nut connecting member 14 is connected to the nut 15 of a ball screw/nut mechanism. Furthermore, the reference numeral 16 denotes the ball screw of the ball screw/nut mechanism; this ball screw passes through holes formed in the centers of the load detection device 2 and nut connecting member 14.

The pressure transmitting member 11 in this third embodiment is rotationally supported by a bearing 6, and transmits the resin pressure that is applied to the injection screw 8 to the second housing 7, but does not have the role of transmitting the rotation of the driven pulley 4 to the injection screw 8 as in the case of the rotation transmitting member 5 of the first embodiment. The reason for this is that in the third embodiment, the injection screw 8 is connected to the driven pulley 4 via the screw connecting member 13.

In this third embodiment as well, as in the first embodiment shown in Fig. 1, even if the belt tension should act on the driven pulley 4, the movement of the driven pulley 4 in the direction perpendicular to the axial direction of injection due to the belt tension is restricted since the driven pulley 4 is held on the first housing by the bearing 3; furthermore, such movement is absorbed by the spline coupling 17 between the screw connecting member 13 and the injection screw 8, and the spline coupling 17 between the driven pulley 4 and the pressure transmitting member 11, so that there is almost no sliding resistance in the areas of these spline couplings 17. Furthermore, since the pressure transmitting member 11, bearing 6 and second housing 7 are attached so that these parts cannot move relative to each other in the axial direction, and since there are no sliding surfaces between these parts and the first housing 1, the resin pressure that acts on the injection screw 8 can be accurately measured by the load detection device 2 while being almost unaffected by any frictional force.

Fig. 4 is a sectional view of essential parts of an injection device constituting a fourth embodiment of the present invention.

In the second embodiment (Fig. 2), the injection screw 8 is attached to the rotation transmitting member 10 by the screw connecting member 13. In the fourth embodiment, on the other hand, the injection screw 8 is attached to the driven pulley 4 by the screw connecting member 13. Furthermore, in the second embodiment, the injection screw 8 is integrally fastened to the rotation transmitting member 10, while in the present embodiment, the injection screw 8 contacts the pressure transmitting member 12. In other words, an aspect in which the rotation transmitting member 5 of the first embodiment (Fig. 1) is modified to the rotation transmitting member 10 of the second embodiment (Fig. 2) resembles an aspect in which the pressure transmitting member 11 of the third embodiment (Fig. 3) is modified to the pressure transmitting member 12 of the fourth embodiment (Fig. 4).

In this fourth embodiment, the driven pulley 4 and injection screw 8 are connected by the screw connecting member 13. This screw connecting member 13 is connected to the shaft of the injection screw 8 by a spline coupling so that this screw connecting member 13 is incapable of relative rotation with respect to the shaft of the injection screw 8, but is capable of movement in the axial direction. Furthermore, when the screw connecting member 13 is fastened to the driven pulley 4 by means of bolts, the expanded-diameter portion 8a formed on the injection screw 8 is pressed against the pressure transmitting member 12; accordingly, the rear end surface of the injection screw 8 contacts the pressure transmitting member 12. Moreover, the driven pulley 4 is connected to the pressure transmitting member 12 by a spline coupling 17 so that relative rotation is impossible (but so that relative movement in the axial direction is possible). The remaining construction is the same as in the second embodiment shown in Fig. 2.

In this fourth embodiment as well, the resin pressure that is applied to the injection screw 8 is transmitted to the inner ring part 2b of the load detection device 2 via the pressure transmitting member 12, bearing 6 and shaft 9 (second member).

Since the pressure transmitting member 12, bearing 6 and shaft 9 are attached so that relative movement of these parts in the axial direction is impossible, and since there are no sliding surfaces between these parts and the first housing 1, there is no effect of any frictional force. Furthermore, since only a slight frictional resistance is generated in the spline coupling 17 of the driven pulley 4 and the pressure transmitting member 12 and in the spline coupling part 17 of the screw connecting member 13 and injection screw 8 (as in the first through third embodiments), the resin pressure that is applied to the injection screw 8 can be accurately measured by the load detection device 2.

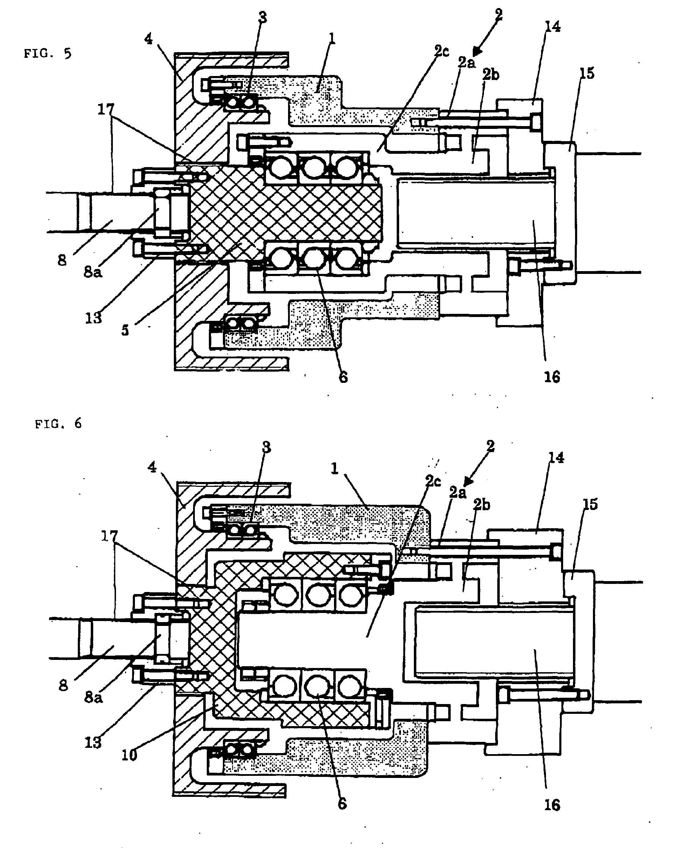

Fig. 5 is a sectional view of essential parts of an injection device constituting a fifth embodiment of the present invention.

In the first embodiment (Fig. 1), a bearing 6 which supports the rotation transmitting member 5 so that this member can rotate is attached to the second housing 7, and the second housing 7 is fastened to the inner ring part 2b of the load detection device 2. In the fifth embodiment, on the other hand, a bearing 6 which supports the rotation transmitting member 5 so that this member can rotate is attached to the rotation transmitting member attachment part 2c of the load detection device 2. The remaining construction is the same as in the first embodiment.

In the injection process, the force of the advancing nut 15 and nut connecting member 14 is transmitted to the first housing 1 and the rotation transmitting member attachment part 2c of the load detection device 2 via the load detection device 2. The force that is transmitted to the rotation transmitting member attachment part 2c is further transmitted to the injection screw 8 via the bearing 6 and rotation transmitting member 5.

Furthermore, in the metering process, the force that causes the injection screw 8 to retract is transmitted to the load detection device 2 via the rotation transmitting member 5, bearing 6, and rotation transmitting member attachment part 2c of the load detection device 2.

In this fifth embodiment as well, since the rotation transmitting member 5, bearing 6 and rotation transmitting member attachment pat 2c of the load detection device 2 are attached so that these parts cannot move in the axial direction relative to each other, and since there are no sliding surfaces between these members and the first housing 1, these parts are not subjected to the effects of any frictional force. Furthermore, as in the first embodiment, no radial load generated by the tension of the belt acts on the rotation transmitting member 5. Accordingly, as in the first embodiment, the resin pressure that is applied to the injection screw 8 can be accurately measured by the load detection device 2.

In this embodiment, a rotation transmitting member attachment part 2c is formed on the load detection device 2, and the bearing 6 is attached to this rotation transmitting member attachment part 2c. In the first embodiment, on the other hand, the second housing 7 is fastened to the inner ring part 2b of the load detection device 2 by means of bolts or the like, and the bearing 6 is attached to this second housing 7. Accordingly, in the first embodiment, when the second housing 7 is fastened to the inner ring part 2b of the load detection device 2 by means of bolts or the like, a slight strain caused by compression (initial strain) is applied to the inner ring part 2b, so that the zero point of the load detection device 2 may shift. In the fifth embodiment, however, no such initial strain is applied; accordingly, the fifth embodiment allows more accurate detection of the pressure. On the other hand, the shape of the load detection device 2 is more complicated in the fifth embodiment than in the first embodiment.

Furthermore, the characterizing feature in the fifth embodiment of forming a rotation transmitting member attachment part 2c on the load detection device 2 and of attaching the bearing 6 to this rotation transmitting member attachment part 2c can also be applied to the third embodiment shown in Fig. 3. Specifically, in the injection device shown in Fig. 3, the second housing 7 to which the bearing 6 that rotatably supports the pressure transmitting member 11 is attached can be replaced with the rotation transmitting member attachment part 2c of the load detection device 2 shown in Fig. 5.

Fig. 6 is a sectional view of essential parts of an injection device constituting a sixth embodiment of the present invention.

This sixth embodiment corresponds to an embodiment in which the shaft 9 in the second embodiment shown in Fig. 2 is replaced with the rotation transmitting member attachment part 2c of the load detection device 2; the remaining construction is the same as in the second embodiment.

In the injection process, the force of the advancing movement of the nut 15 and nut connecting member 14 is transmitted to the first housing 1 and the rotation transmitting member attachment part 2c of the load detection device 2 via the load detection device 2. The force that is transmitted to the rotation transmitting member attachment part 2c is further transmitted to the injection screw 8 via the bearing 6 and rotation transmitting member 10.

Furthermore, in the metering process, the retracting force of the injection screw 8 is transmitted to the load detection device 2 via the rotation transmitting member 10, bearing 6 and rotation transmitting member attachment part 2c of the load detection device 2.

In this sixth embodiment as well, since the rotation transmitting member 10, bearing 6 and rotation transmitting member attachment part 2c of the load detection device 2 are attached so that these members cannot move in the axial direction relative to each other, and since there are no sliding surfaces between these members and the first housing 1, these members are unaffected by any frictional force. Furthermore, as in the second embodiment, no radial load generated by the tension of the belt acts on the rotation transmitting member 10. Accordingly, as in the second embodiment, the resin pressure that is applied to the injection screw 8 can be accurately measured by the load detection device 2.

In this embodiment, a rotation transmitting member attachment part 2c is formed on the load detection device 2, and the bearing 6 is attached to this rotation transmitting member attachment part 2c. In the second embodiment, on the other hand, a shaft 9 is fastened to the inner ring part 2b of the load detection device 2, and the bearing 6 is attached to this shaft 9. Accordingly, in the second embodiment, when the shaft 9 is fastened to the inner ring part 2b of the load detection device 2 by means of bolts or the like, a slight strain caused by compression (initial strain) is applied to the inner ring part 2b, so that the zero point of the load detection device 2 shifts. In the sixth embodiment, however, since no such initial strain is applied, the sixth embodiment allows more accurate measurement of the pressure. On the other hand, the shape of the load detection device 2 is more complicated in the sixth embodiment than in the second embodiment.

Furthermore, the characterizing feature in the sixth embodiment of forming a rotation transmitting member attachment part 2c on the load detection device 2 and of attaching the bearing 6 to this rotation transmitting member attachment part 2c can also be applied to the fourth embodiment shown in Fig. 4. Specifically, in the injection device shown in Fig. 4, the shaft 9 to which the bearing 6 that rotatably supports the pressure transmitting member 12 is attached can be replaced with the rotation transmitting member attachment part 2c of the load detection device 2 shown in Fig. 6.

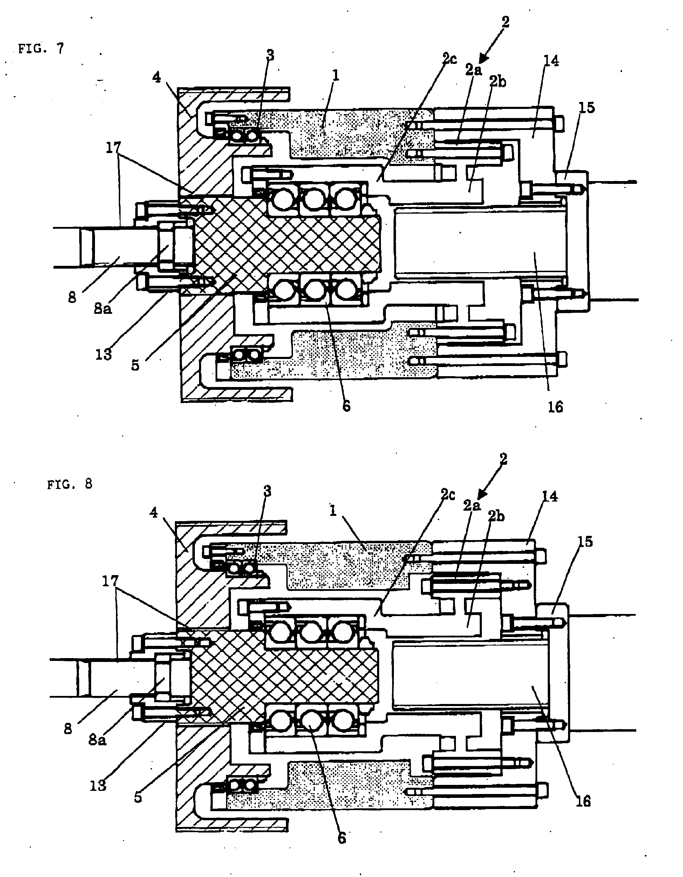

Fig. 7 is a sectional view of essential parts of an injection device constituting a seventh embodiment of the present invention.

In the fifth embodiment (Fig. 5), the first housing 1 is attached to a nut connecting member 14 via the outer ring part 2a of the load detection device 2. In the seventh embodiment, on the other hand, the first housing 1 is directly attached to the outer ring part 2a of the load detection device 2.

In the seventh embodiment, as a result of the abovementioned construction, the force of the advancing movement of the nut connecting member 14'is applied directly to the first housing 1. In the fifth embodiment (Fig. 5), on the other hand, the force of the advancing movement of the nut connecting member 14 is applied to the first housing 1 via the outer ring part 2a of the load detection device 2. Accordingly, in the fifth embodiment, the thrust that causes the first housing 1 to move is applied as a force that compresses the outer ring part 2a of the load detection device 2. In the seventh embodiment, however, since no compressive force is applied to the outer ring part 2a of the load detection device 2, the seventh embodiment allows more accurate detection of the pressure. On the other hand, the first housing 1 is larger in the seventh embodiment than in the fifth embodiment.

Furthermore, the characterizing feature in the seventh embodiment of attaching directly the first housing 1 to the outer ring part 2a of the load detection device 2 can also be applied to the first embodiment shown in Fig. 1, the second embodiment shown in Fig. 2, the third embodiment shown in Fig. 3, the fourth embodiment shown in Fig. 4, and the sixth embodiment shown in Fig. 6.

Fig. 8 is a sectional view of essential parts of an injection device constituting an eighth embodiment of the present invention.

In the fifth embodiment (Fig. 5), the first housing 1 is attached to a nut connecting member 14 via the outer ring part 2a of the load detection device 2. In the eighth embodiment, on the other hand, the nut connecting member 14 is attached to the first housing 1, and the outer ring part 2a of the load detection device 2 is attached to this nut connecting member 14. Specifically, the outer ring part 2a of the load detection device 2 is attached to the first housing 1 via the nut connecting member 14.

In this eighth embodiment, as a result of the abovementioned construction, the force of the advancing movement of the nut connecting member 14 is applied directly to the first housing 1. In the fifth embodiment, on the other hand, the force of the advancing movement of the nut connecting member 14 is applied to the first housing 1 via the outer ring part 2a of the load detection device 2. Accordingly, in the fifth embodiment, the thrust that causes the first housing 1 to move is applied as a force that compresses the outer ring part 2a of the load detection device 2. In the eighth embodiment, however, no compressive force is applied to the outer ring part 2a of the load detection device 2; accordingly, the eighth embodiment allows more accurate detection of the pressure. On the other hand, the first housing 1 is larger in the eighth embodiment than in the fifth embodiment.

Furthermore, in the eighth embodiment, since the bolts that are used to fasten the outer ring part 2a of the load detection device 2 are not directly subjected to the injection force, the diameter of the bolts used to fasten the outer ring part 2a of the load detection device 2 can be reduced, or the number of such bolts used can be reduced, as compared with the case of the seventh embodiment.

Furthermore, the characterizing feature in the eighth embodiment of connecting the first housing 1 to the outer ring part 2a of the load detection device 2 via the nut connecting member 14 can also be applied to the first embodiment shown in Fig. 1, the second embodiment shown in Fig. 2, the third embodiment shown in Fig. 3, the fourth embodiment shown in Fig. 4, and the sixth embodiment shown in Fig. 6.

Furthermore, the first housing 1 may also be formed as an integral unit with the outer ring part 2a of the load detection device 2.

## Claims

1. An injection device for an injection molding machine comprising:
a first member which moves in the axial direction of an injection screw;
a pulley which is rotatably supported on the first member;
a rotation transmitting member, which is connected to the pulley so as not to relatively rotate and so as to move in the axial direction, and in which an injection screw is attached to the front surface of the rotation transmitting member;
a second member which cannot move in the axial direction and does not contact the first member, and which rotatably supports the rotation transmitting member via a bearing; and
a load detection device which has an outer ring part and an inner ring part, wherein
the outer ring part of the load detection device is attached to the first member, the inner ring part of the load detection device is attached to the second member, and resin pressure that acts on the injection screw is measured by the load detection device.

2. The injection device for an injection molding machine according to claim 1, wherein the second member has a recessed part, and the rotation transmitting member is attached to the recessed part so as to rotate and so as not to move in the axial direction.

3. The injection device for an injection molding machine according to claim 1, wherein the rotation transmitting member has a recessed part, and the second member is attached to the recessed part so as to rotate and so as not to move in the axial direction.

4. An injection device for an injection molding machine comprising:
a first member which moves in the axial direction of an injection screw;
a pulley which is rotatably supported on the first member, and which is connected to the rear end of the injection screw so as to move in the axial direction and so as not to rotate;
a second member which is disposed in a position at which the second member does not contact the first member;
a pressure transmitting member which is attached to the second member via a bearing so as to rotate and so as not to move in the axial direction, and which contacts the rear end of the injection screw so as to rotate together with the injection screw; and
a load detection device which has an outer ring part and an inner ring part, wherein
the outer ring part of the load detection device is attached to the first member, the inner ring part of the load detection device is attached to the second member, and resin pressure that acts on the injection screw is measured by the load detection device.

5. The injection device for an injection molding machine according to claim 4, wherein the second member has a recessed part, and the pressure transmitting member is attached to the recessed part so as to rotate together with the injection screw and so as not to move in the axial direction.

6. The injection device for an injection molding machine according to claim 4, wherein the pressure transmitting member has a recessed part, and the second member is attached to the recessed part so as to rotate and so as not to move in the axial direction.

7. An injection device for an injection molding machine comprising:
a first member which moves in the axial direction of an injection screw;
a pulley which is rotatably supported on the first member;
a rotation transmitting member which is connected to the pulley so as not to rotate but so as to move in the axial direction, and in which the injection screw is attached to the front surface of the rotation transmitting member; and
a load detection device which has an inner ring part and an outer ring part, wherein
a rotation transmitting member attachment part is formed on the inner ring part of the load detection device so as not to contact the first member, the rotation transmitting member is attached to the rotation transmitting member attachment part via a bearing so as to rotate and so as not to move in the axial direction,
the first member is attached to the outer ring part of the load detection device, and
resin pressure that acts on the injection screw is measured by the load detection device.

8. The injection device for an injection molding machine according to claim 7, wherein the rotation transmitting member attachment part of the load detection device has a recessed part, and the rotation transmitting member is attached to the recessed part so as to rotate and so as not to move in the axial direction.

9. The injection device for an injection molding machine according to claim 7, wherein the rotation transmitting member has a recessed part, and the rotation transmitting member attachment part of the load detection device is attached to the recessed part so as to rotate and so as not to move in the axial direction.

10. An injection device for an injection molding machine comprising:
a first member which moves in the axial direction of an injection screw;
a pulley which is rotatably supported on the first member, and which is connected to the rear end of the injection screw so as to move in the axial direction and so as not to rotate;
a pressure transmitting member which contacts the rear end of the injection screw; and
a load detection device which has an inner ring part and an outer ring part, wherein
a pressure transmitting member attachment part for attaching the pressure transmitting member is formed on the inner ring part of the load detection device so as not to contact the first member, the pressure transmitting member is attached to the pressure transmitting member attachment part via a bearing so as to rotate and so as not move in the axial direction,
the first member is attached to the outer ring part of the load detection device, and
resin pressure that acts on the injection screw is measured by the load detection device.

11. The injection device for an injection molding machine according to claim 10, wherein the pressure transmitting member attachment part of the load detection device has a recessed part, and the pressure transmitting member is attached to the recessed part so as to rotate together with the injection screw and so as not to move in the axial direction.

12. The injection device for an injection molding machine according to claim 10, wherein the pressure transmitting member has a recessed part, and the pressure transmitting member attachment part of the load detection device is attached to the recessed part so as to rotate together with the injection screw and so as not to move in the axial direction.

13. The injection device for an injection molding machine according to any one of claims 1, 4, 7 and 10, wherein a nut connecting member of a screw/nut mechanism that drives the first member is attached to the outer ring part of the load detection device.

14. The injection device for an injection molding machine according to any one of claims 1, 4, 7 and 10, wherein a nut connecting member of a screw/nut mechanism that drives the first member is attached to the first member.

15. The injection device for an injection molding machine according to any one of claims 1, 4, 7 and 10, wherein the first member is attached to the outer ring part of the load detection device via a nut connecting member of a screw/nut mechanism that drives the first member.
